(19) **Europäisches Patentamt / European Patent Office / Office européen des brevets**

(11) **EP 2 375 854 B1**

(12) **EUROPEAN PATENT SPECIFICATION**

(45) Date of publication and mention of the grant of the patent:
**02.12.2015 Bulletin 2015/49**

(51) Int Cl.:
*H05B 1/02* (2006.01)     *H05B 3/82* (2006.01)
*F01N 3/20* (2006.01)

(21) Application number: **11160239.7**

(22) Date of filing: **29.03.2011**

(54) **Heater for a vehicular fluid tank, motor vehicle comprising same, and method for heating a vehicular fluid tank**

Heizvorrichtung für einen Fahrzeugflüssigkeitstank, Kraftfahrzeug damit und Verfahren zum Heizen des Fahrzeugflüssigkeitstanks

Chauffage pour réservoir de liquide véhiculaire, véhicule à moteur doté de celui-ci et procédé de chauffage d'un réservoir de liquide véhiculaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2010 EP 10159125**

(43) Date of publication of application:
**12.10.2011 Bulletin 2011/41**

(73) Proprietor: **Plastic Omnium Advanced Innovation and Research**
**1120 Bruxelles (BE)**

(72) Inventors:
• **Etorre, Laurent**
 **1030, SCHAERBEEK (BE)**
• **Barzic, Florent**
 **80637, MUNICH (DE)**

• **Lavenier, François-Régis**
 **1090, JETTE (BE)**
• **Naydenov, Volodia**
 **1348, LOUVAIN-LA-NEUVE (BE)**
• **Zeller, Guillaume**
 **1040, BRUSSELS (BE)**
• **Garcia-Lorenzana, Ignacio**
 **60325, FRANKFURT AM MAIN (DE)**

(74) Representative: **de la Bigne, Guillaume Michel Marie et al**
**LLR**
**11 boulevard de Sébastopol**
**75001 Paris (FR)**

(56) References cited:
**EP-A2- 1 505 292    WO-A1-86/02227**
**WO-A1-91/17640    AU-B2- 661 557**
**US-A- 4 504 732    US-A- 6 080 971**

**Description**

The present invention pertains to a heating system for a vehicular fluid tank, said heating system comprising at least one resistive element and a control unit adapted to direct an electric current through said at least one resistive element. The present invention also pertains to a motor vehicle comprising such a heating system. The present invention also pertains to a method for heating a vehicular fluid tank.

Heating systems for vehicular fluid tanks, in particular for tanks intended to hold liquids which can freeze at normal winter temperatures, such as ammonia precursor solutions used in selective catalytic reduction reactions (SCR) to treat exhaust gas from internal combustion engines, are known in the art. A commonly used type of precursor solution is a eutectic liquid mixture of water and urea, which is commercially available under the trademark AdBlue. This solution is known to freeze at temperatures below approximately -11 °C, a condition which regularly occurs during winter time in many areas of the world. Hence, it is necessary under these conditions to thaw a quantity of the stored solution before the reduction of the NOx compounds in the exhaust gas can start taking place.

Patent application WO 2008/138960 A1 in the name of applicant describes a urea tank and base plate with an integrated heating element. The integrated heating element comprises at least one flexible heating part. Preferably, the flexible part is a flexible heater, that is to say that it comprises at least one resistive track inserted between two flexible films or affixed to a flexible film.

In the heating systems described above, it is important to avoid overheating of the ammonia precursor solution, which could lead to unpleasant odors and even to undesirable alterations of the properties of the solution. The prior-art solution to this problem is to use heating elements with a resistance that has a positive temperature coefficient (PTC), thus providing a certain amount of self-regulation. However, when the PTC is warm, less heating power is available. Besides, since the current consumption varies with temperature, a diagnosis of the heater based on the plausibility of the current consumption is difficult.

In typical automotive situations, the power supply voltage can range between 9 and 16 Volt, depending on the overall instantaneous load on the electrical system. The supply voltage fluctuates as various electrical functions switch on and off, as a result of actions by the vehicle operator or instructions from the vehicle electronics. Typically, these electrical functions are a mix of high-consumption functions such as an air conditioning unit and a rear window defroster, and low-consumption unit such as various electronic circuits and indicators. These functions may cycle through on and off status at very diverse timescales. As a result, the amount of heat dissipated by the resistive element will also fluctuate, making it difficult to control the precise conditions under which the content of the vehicular fluid tank will be thawed and/or heated.

The controllability of the heating conditions is a serious concern for SCR systems, because vehicle manufacturers want to ensure a sufficiently rapid thawing process to comply with applicable emission standards, in particular with respect to NOx emissions, while avoiding overheating of the ammonia precursor solution. It is a further concern to avoid overheating of the heating system itself, including for example the control unit, the fluid container, the wiring and the resistive elements.

EP 1 505 292 A2 discloses a heating device for heating fuel in a vehicle comprising a body having an inlet and an outlet. Arranged inside the body are electrical heating means in contact with the fluid, means for controlling the electrical supply of the heating means, sensor means for detecting at least one respective characteristic of the fluid, and a circuit arrangement pre-arranged for controlling at least the electrical-supply control means and the sensor means. The circuit arrangement comprises nonvolatile memory means designed to contain modifiable or re-writable data or parameters, for the purposes of regulation and/or control of the operation of the device.

US 4,504,732 discloses a heating device for use in motor vehicles to rapidly heat combustion chambers, exhaust gas sensors, catalyzers and other associated apparatus. A resistive heating element is connected in series with a low-impedance measuring resistor and a switch across a power source, while a resistance bridge is formed with the aid of two further resistors. The diagonal bridge voltages are compared in a comparator whose output actuates a control circuit which operates the heater switch. The heater switch also provides the power for the comparator. In a first interval, constant current is applied to the heating element, while the current is pulsed during a second time interval. The switch control pulses may be provided by a free-running oscillator or one whose pulses are synchronized with the undulations of the engine starter current.

WO 86/02227 discloses an arrangement in which the temperature of a liquid bath in the tank portion of a clinical analyzer is precisely regulated without overshoot or oscillation about a known reaction temperature of, for example, about 37.0 degrees C by providing an electric heating element in a bath liquid heater assembly located outside of the tank portion for heating bath liquid circulated through the heater assembly and into the tank portion through an inlet by a pump. The temperature of the liquid is controlled by a temperature regulation system including a first temperature sensor located proximate the outlet of the heater assembly for detecting the temperature of the liquid entering the tank portion through the inlet, a second temperature sensor having a time constant about ten times that of the first sensor for detecting the liquid temperature in the tank portion at a point remote from the inlet, and a control circuit controlling the energization of the heating element in accordance with the liquid temperature measured by the first and second temperature sensors. Constant temperature is maintained notwithstanding the transport of objects to be heated, e.g., disposable reaction cuvettes, through the liquid bath or other causes of sudden changes in ambient temperature conditions.

US 6,080,971 discloses an electrically powered water heater including a plurality of heating elements for substantially instantaneous heating of fluid passing through the heater. A controller for powering the plurality of heating elements is responsive to a temperature sensor in fluid communication with the heated fluid. The temperature sensor activates each of the plurality of heating elements for a predetermined period of time that is preferably no more than 32 half cycles. The controller activates a second heating element after a delay of preferably no more than 8 half cycles after activating a first heating element. The predetermined period of time for activating each of the plurality of heating elements may be substantially equal, such that each heating element contributes substantially equally to the heating of fluid. In one embodiment, the heater housing is provided with a plurality of chambers, and a heating element is provided within each of the plurality of chambers.

AU-B-33984/93 discloses a waterboiler including 2 kW and 1 kW heating elements that together heat the water) to about 96 deg. C, as sensed by a thermistor. The 2 kW element cuts out and the water is further heated, to and maintained at, boiling point by the kW element. In an alternative, the output of a single heating element is modulated by using a transformer to reduce the voltage input. A water inlet has a solenoid valve controlled by a reed switch actuated by a magnetic float. Another reed switch magnetic float ensures that the heating elements cannot be energised until they are immersed.

WO 91/17640 discloses a flow-through instantaneous fluid heater system designed to satisfy the need for a heater not limited by being connected to a storage tank and which can be made using a plastic casing; incorporating cooldown when out of service and features of venting and simplified flushing and draining. The system incorporates the use of one or more compartments usually assembled in two compartment modules connected in series. Each compartment includes a casing having a hollow cylindrical interior region. An inlet aperture is located at one end of the casing and an outlet aperture is located at the other end of the casing. The lower end of each casing is closed by a removable base and the upper end of the casing is closed by a top plate and a heating element. The heating element is positioned axially in the interior region of the compartment. A control system uses temperature comparisons to detect flow through the system to determine whether the heating elements should be activated to maintain the fluid at a stand-by temperature or at an operational temperature.

It is an object of the present invention to provide a heating system of the kind described above that meets the above concerns.

According to an aspect of the invention, there is thus provided a heating system as described, wherein the control unit is adapted to vary said current according to a pulse width modulation scheme.

The invention is based on the insight that by varying the duty cycle of the pulse width modulated current, the amount of heat dissipated by the resistive element varies in the same degree.

Hence, the heating system can advantageously be dimensioned to operate according to a desired characteristic at the lowest supply voltage that can normally be expected, and the duty cycle of the pulse width modulated current can then be modulated to compensate when the actual supply voltage is higher than this minimum.

The use of pulse width modulation to control a heater is known in the art. US patent application 2004/0170212 A1 discloses the use of pulse width modulation to control the average effective current directed through a resistance heater. The heater disclosed therein is intended for heating a sensor and does not have the required characteristics for use with a vehicular fluid tank.

It is a further object of embodiments of the present invention to allow for a staged thawing process, in which a first stage operates at a higher level of heat dissipation, as required to rapidly thaw a sufficient quantity of solution to allow a pump to start operating, and a second stage operates at a lower level of heat dissipation, to allow a gradual thawing of the remainder of the tank contents.

In an embodiment of the heating system of the present invention, the pulse width modulation scheme is applied so that at least two distinct heating power levels can be obtained.

This embodiment has the advantage of allowing a staged thawing process. The respective desired characteristics are obtained by applying a further modification to the duty cycle.

In an embodiment of the heating system of the present invention, the control unit is adapted to determine the duty cycle in inverse proportion to the square a smoothened measurement of the supply voltage.

Use of a smoothened measurement has the advantage that high-frequency fluctuations of the supply voltage are ignored. This can be done without negatively impacting the operation of the heating system, because the thermal inertia of the resistive element and its surroundings will normally be sufficiently large to make very fine-grained modulation thermally undetectable.

In an embodiment, the heating system further comprises a temperature sensor operatively coupled to said control unit, wherein said control unit is adapted to modify a duty cycle of said current in response to a temperature

EP 2 375 854 B1

reading received from said temperature sensor.

This embodiment has the advantage of being able to provide an additional protection against overheating of selected parts of the vehicular tank system. In a particular embodiment, the temperature sensor is placed in or near the control unit. This embodiment has the advantage of protecting the control unit, which may be implemented with temperature-sensitive electronics. In another particular embodiment, the temperature sensor is placed near the resistive element. This embodiment has the advantage of providing a real feedback loop, such that the system can operate like a thermostat in addition to the control features described above.

According to an aspect of the invention, there is provided a motor vehicle comprising a fluid tank equipped with the heating system of the invention.

According to another aspect of the invention, there is provided a method for heating a vehicular fluid tank with at least one resistive element receiving an electric current from a power supply under the control of a control unit (120), the method comprising varying said current according to a pulse width modulation scheme.

In an embodiment of the method of the present invention, the pulse width modulation scheme is applied in such a way that at least two distinct heating power levels can be obtained.

In an embodiment, the method of the present invention further comprises measuring a voltage of said power supply, smoothening said supply voltage, and determining a duty cycle for said pulse width modulation in inverse proportion to the square of said smoothened supply voltage.

In an embodiment, the method of the present invention further comprises measuring a temperature, and modifying a duty cycle of said current in response to said temperature. In a particular embodiment, said temperature is measured in or near said control unit (120). In a particular embodiment, said temperature is measured near said resistive element (110).

These and other aspects of the invention will be better understood by reference to the following figures, in which:

Figure 1 is a schematic representation of the heating system of the present invention;
Figure 2 is a diagram of the relative pulse width in function of the supply voltage in a heating system according to the present invention; and
Figure 3 is a flow chart of an embodiment of the method according to the present invention.

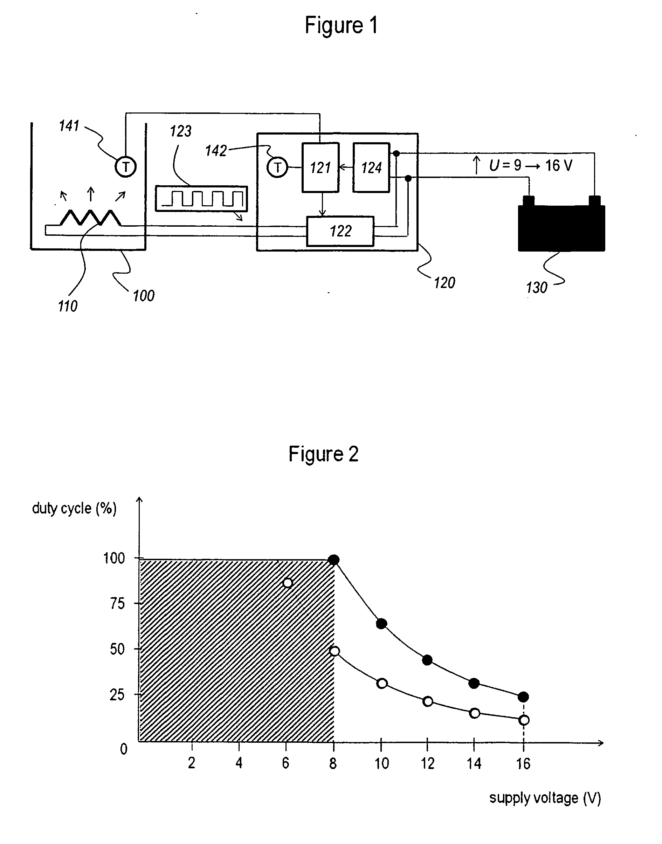

The embodiment schematically depicted in Figure 1 comprises a resistive element **110** inside a vehicular fluid tank **100,** in particular tank for holding a urea solution, whereby the resistive element **110** is used to heat the content of the tank **100.** In particular embodiments of the system of the present invention, resistive elements may also or instead be arranged outside and near the tank, or at accessories of the tank which require expedited thawing of the surrounding solution, such as a urea solution pump.

The resistive element **110** receives a current from a control unit **120,** which draws its energy from a power supply, here depicted as a battery **130.** The skilled person shall understand that although only a battery **130** is shown, other power supply elements such as an alternator may be present in addition to or as an alternative to the battery **130.**

The skilled person will also appreciate that wherever in this description the control unit **120** is described as delivering, directing, or controlling a current, this action may in fact be accomplished by acting accordingly on the voltage of the corresponding electrical signal, the two variables being intrinsically linked by the overall resistance of the circuit through which the electrical energy is led.

Control unit **120** is adapted to convert the power supply voltage provided by battery **130,** which may fluctuate between approximately 9 V and approximately 16 V, into a pulse width modulated electrical signal, schematically illustrated as block wave **123.** The energy in this signal is converted to heat by the resistive element **110.**

To this end, the control unit **120** comprises a duty cycle calculating agent **121** and a switching agent **122.**

The duty cycle calculating agent **121** combines all relevant information to determine the desired duty cycle according to the present inventive concept. Thus, the duty cycle calculating agent **121** is adapted to determine the required duty cycle for a desired level of heat dissipation, taking into account the instantaneous supply voltage level delivered by the battery **130,** as described in more detail with reference to Figure 2 below. Preferably, the duty cycle calculating agent **121** is adapted to determine the respective required duty cycles for a first and a second desired level of heat dissipation, taking into account the instantaneous supply voltage level. The duty cycle calculating agent **121** measures the supply voltage directly, or indirectly after the operation of smoothener **124,** which is intended to remove high-frequency fluctuations from the measured supply voltage measurement. The smoothener **124** may be implemented as a usual low-pass filter.

The control unit **120,** and more particularly the duty cycle calculating agent **121,** is operatively coupled to a first temperature sensor **141** arranged near the resistive element **110,** preferably in the tank **100,** and/or a second temperature sensor **142** arranged in or near said control unit **120.** The duty cycle calculating agent **121** can take temperature readings from these temperature sensors **141, 142** into account in the determination of the duty cycle, in order to meet additional objectives, such as avoiding unnecessary heating of the tank 100 when the content is not frozen, avoiding overheating of the content of the tank 100, and avoiding overheating of the control unit **120,** the components of which may be temperature-sensitive.

The switching agent **122,** operatively coupled to the duty cycle calculating agent **121,** is adapted to perform the actual pulse width modulation according to the duty cycle determined by the duty cycle calculating agent **121,** thus transforming the voltage supplied by the battery **130** into the desired voltage wave **123.**

The duty cycle calculating agent **121** and the switching agent **122** may be implemented, separately or together, using any of the well known technologies for electronic control circuitry, including for example appropriately programmed processors or microcontrollers, appropriately configured programmable logic including field-programmable gate arrays (FGPAs), dedicated integrated circuits (ASICs), and discrete electronic circuits.

Figure 2 represents the relative pulse width in function of the supply voltage in a heating system according to an embodiment of the present invention. For illustrative purposes, it is assumed that the heating system is adapted to operate at a first heating power level of $P_1$ = 100 W and a second heating power level of $P_2$ = 50 W. The heating system is designed to provide these power levels at a supply voltage level of $U_{min}$ = 8 V, which corresponds to slightly less than the lowest normally expected supply voltage in a typical automotive system. As $P_2 = U_{min}^2/R$ for a duty cycle of 100%, i.e. for a heater that is always on, we find that the resistive element has to have a resistance of 0,64 $\Omega$

In order to maintain a first heat dissipation level of 100 W for levels of the supply voltage above the minimum level mentioned above, the duty cycle of the pulse width modulated heating current is reduced. Thus, as a twofold increase in the supply voltage, i.e. a supply voltage of 16 V, would result in a fourfold increase in heat dissipation under otherwise identical conditions, the corresponding duty cycle has to be set to 25% in order to maintain a 100 W heat dissipation level. The same calculation applies to any intermediate value of the supply voltage, thus leading to the uppermost curve (with data points shown as solid bullets) in the diagram of Figure 2, in which the resulting duty cycle clearly displays a $1/U^2$ proportionality.

In order to obtain a second heat dissipation level of 50 W at the minimum supply voltage level $U_{min}$ mentioned above, the duty cycle of the pulse width modulated heating current is set to 50% at this voltage. To maintain this level of heat dissipation for levels of the supply voltage above the minimum level, the duty cycle is further reduced. Again, as a twofold increase in the supply voltage, i.e. a supply voltage of 16 V, would result in a fourfold increase in heat dissipation under otherwise identical conditions, the corresponding duty cycle has to be set to 12.5% in order to maintain a 50 W heat dissipation level. The same calculation applies to any intermediate value of the supply voltage, thus leading to the lowermost curve (with data points shown as hollow bullets) in the diagram of Figure 2, in which the resulting duty cycle again clearly displays a $1/U^2$ proportionality.

In Figure 2, the hashed region representing supply voltage levels between 0 V and 8 V is an anomalous region. It is not possible to determine a duty cycle value between 0% and 100% which would lead to the desired heat dissipation of 100 W if the resistance of the heating element is chosen as indicated above. Using duty cycle values above 50%, it is in principle possible to provide a heating level of 50 W as long as the supply voltage is greater than or equal to

$$U_{50W} = \sqrt{(100\% \times 50 \text{ W} \times 0{,}64 \ \Omega)} = 5{,}66 \text{ V}.$$

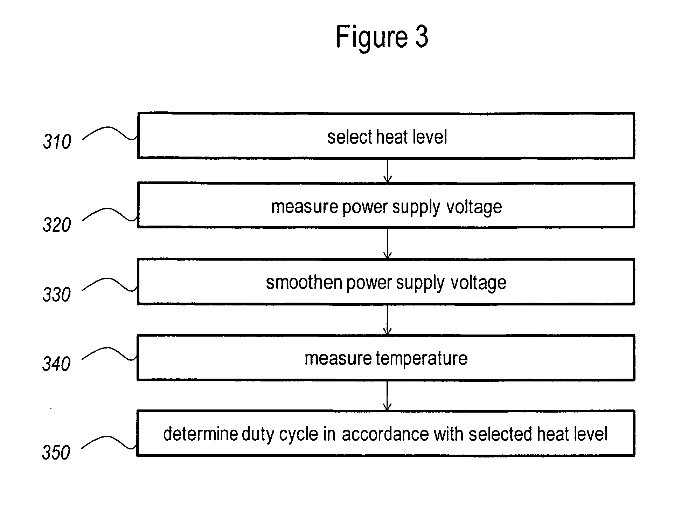

Figure 3 represents a flow chart of an embodiment of the method of the present invention.

In step **310,** a desired heat level is selected from at least a first and a second desired level of heat dissipation. This may happen according to a predetermined time-schedule, for instance in order to apply a higher heat dissipation level during a predetermined time $T_1$ immediately after the engine start, and a lower heat dissipation level after the expiry of time $T_1$. In step **320,** the instantaneous power supply voltage is measured. The supply voltage is optionally smoothened at step **330.**

The order of steps **320** and **330** may vary between embodiments. The supply voltage may be measured as it is, whereupon a numerical smoothening algorithm, such as a time averaging algorithm, is applied to the measurement values. Alternatively, the supply voltage may be passed through a low-pass filter or other electronic smoothening means, whereupon the smoothened signal is measured for further use by the control unit. Measurement and smoothening may also be combined, for instance by using a low-frequency sample-and-hold measurement method.

Optionally, one or more temperature values are obtained by measurement, preferably by temperature sensors positioned as described above for sensors **140** and **141** of Figure 1.

Finally, in step **350,** all the relevant information is combined to determine the desired duty cycle according to the present inventive concept. Thus, the control unit **120** determines the required duty cycle for one of at least a first and a second desired level of heat dissipation, taking into account the instantaneous supply voltage level delivered by the battery **130,** as described in more detail with reference to Figure 2 above. Temperature measurements, if available, are taken into account so as to further reduce the duty cycle (or even shut down the heating system completely, which corresponds to a duty cycle of 0%), for instance when the measurement of the temperature indicates a risk of overheating of the tank contents and/or the control unit.

Although the method of the present invention has been described and illustrated as a series of consecutive steps, the skilled person will appreciate that the order of these steps is generally not material to the invention.

Although the invention has been described herein with reference to certain exemplary embodiments, the skilled person will understand that these embodiments serve to illustrate and not to limit the invention, the full scope of which is determined by the enclosed claims.

**Claims**

1. A heating system for a vehicular fluid tank (100), said heating system comprising at least one resistive element (110) and a control unit (120) adapted to direct an electric current through said at least one resistive element (110), said control unit (120) being adapted to vary said current according to a pulse width modulation scheme, **characterized in that** said control unit (120) is further adapted to determine a duty cycle of said current in inverse proportion to the square of a measurement of the supply voltage.

2. The heating system of claim 1, wherein said measurement of the supply voltage is a smoothened measurement.

3. The heating system of claim 1 or claim 2, wherein the pulse width modulation scheme is applied so that at least two distinct heating power levels can be obtained.

4. The heating system of any of the preceding claims, further comprising a temperature sensor (141, 142) operatively coupled to said control unit (120), wherein said control unit (120) is adapted to modify a duty cycle of said current in response to a temperature reading received from said temperature sensor (141, 142).

5. The heating system of claim 4, wherein said temperature sensor (142) is placed in or near said control unit (120).

6. The heating system of claim 4, wherein said temperature sensor (141) is placed near said resistive element (110).

7. A motor vehicle comprising a fluid tank equipped with the heating system of any of the preceding claims.

8. The motor vehicle of claim 7, wherein said fluid tank (100) is a tank for storing an additive to be used in a selective catalytic reduction reaction.

9. A method for heating a vehicular fluid tank (100) with at least one resistive element (110) receiving an electric current from a power supply under the control of a control unit (120), said method comprising varying said current according to a pulse width modulation scheme, **characterized in that** said method further comprises measuring a voltage of said power supply and determining a duty cycle for said pulse width modulation in inverse proportion to the square of said measured supply voltage.

10. The method of claim 9, further comprising smoothening said measured supply voltage, wherein said determining is performed in inverse proportion to the square of said smoothened supply voltage.

11. The method of claim 9 or 10, wherein said pulse width modulation scheme is applied in such a way that at least two distinct heating power levels can be obtained.

12. The method of any of claims 9-11, further comprising measuring a temperature, and modifying a duty cycle of said current in response to said temperature.

13. The method of claim 12, wherein said temperature is measured in or near said control unit (120).

14. The method of claim 12, wherein said temperature is measured near said resistive element (110).

**Patentansprüche**

1. Heizsystem für einen Fahrzeugfluidbehälter (100), wobei das Heizsystem wenigstens ein Widerstandselement (110) und eine Steuereinheit (120) umfasst, die angepasst ist, einen elektrischen Strom durch das wenigstens eine Widerstandselement (110) zu leiten, wobei die Steuereinheit (120) angepasst ist, den Strom gemäß einem Pulsbreitenmodulationsschema zu variieren, **dadurch gekennzeichnet, dass** die Steuereinheit (120) ferner angepasst ist, einen Arbeitszyklus des Stroms in umgekehrtem Verhältnis zum Quadrat eines Messwerts der Versorgungsspannung zu bestimmen.

2.  Heizsystem nach Anspruch 1, wobei der Messwert der Versorgungsspannung ein geglätteter Messwert ist.

3.  Heizsystem nach Anspruch 1 oder 2, wobei das Pulsbreitenmodulationsschema angewandt wird, sodass wenigstens zwei verschiedene Heizleistungsstufen erreicht werden können.

4.  Heizsystem nach einem der vorhergehenden Ansprüche, ferner umfassend einen Temperatursensor (141, 142), der funktionsfähig mit der Steuereinheit (120) gekoppelt ist, wobei die Steuereinheit (120) angepasst ist, einen Arbeitszyklus des Stroms als Antwort auf eine vom Temperatursensor (141, 142) erhaltene Temperaturmessung zu modifizieren.

5.  Heizsystem nach Anspruch 4, wobei der Temperatursensor (142) in der Steuereinheit (120) oder nahe davon angebracht ist.

6.  Heizsystem nach Anspruch 4, wobei der Temperatursensor (141) nahe dem Widerstandselement (110) untergebracht ist.

7.  Kraftfahrzeug, umfassend einen Fluidbehälter, ausgestattet mit dem Heizsystem nach einem der vorhergehenden Ansprüche.

8.  Kraftfahrzeug nach Anspruch 7, wobei der Fluidbehälter (100) ein Behälter zum Aufbewahren eines Additivs ist, das in einer selektiven katalytischen Reduktionsreaktion verwendet werden soll.

9.  Verfahren zum Erwärmen eines Fahrzeugfluidbehälters (100) mit wenigstens einem Widerstandselement (110), das einen elektrischen Strom von einer Stromversorgung unter Steuerung einer Steuereinheit (120) aufnimmt, wobei das Verfahren das Variieren des Stroms gemäß einem Pulsbreitenmodulationsschema umfasst, **dadurch gekennzeichnet, dass** das Verfahren ferner das Messen einer Spannung der Stromversorgung und das Bestimmen eines Arbeitszyklus für die Pulsbreitenmodulation in umgekehrtem Verhältnis zum Quadrat der gemessen Versorgungsspannung umfasst.

10. Verfahren nach Anspruch 9, ferner umfassend das Glätten der gemessenen Versorgungsspannung, wobei das Bestimmen in umgekehrtem Verhältnis zum Quadrat der geglätteten Versorgungsspannung durchgeführt wird.

11. Verfahren nach Anspruch 9 oder 10, wobei das Pulsbreitenmodulationsschema derart angewandt wird, dass wenigstens zwei verschiedene Heizleistungsstufen erreicht werden können.

12. Verfahren nach einem der Ansprüche 9 bis 11, ferner umfassend das Messen einer Temperatur und das Modifizieren eines Arbeitszyklus des Stroms als Antwort auf die Temperatur.

13. Verfahren nach Anspruch 12, wobei die Temperatur in der Steuereinheit (120) oder nahe davon gemessen wird.

14. Verfahren nach Anspruch 12, wobei die Temperatur nahe dem Widerstandselement (110) gemessen wird.


**Revendications**

1.  Système de chauffage pour un réservoir de fluide d'un véhicule automobile (100), ledit système de chauffage comprenant au moins un élément résistif (110) et une unité de commande (120) adaptée de façon à diriger un courant électrique à travers ledit au moins un élément résistif (110), ladite unité de commande (120) étant adaptée de façon à varier ledit courant en fonction d'un système de modulation d'impulsions en durée, **caractérisé en ce que** ladite unité de commande (120) est adaptée en outre de façon à déterminer un cycle de service dudit courant en proportion inverse au carré d'une mesure de la tension d'alimentation.

2.  Système de chauffage selon la revendication 1, dans lequel ladite mesure de la tension d'alimentation est une mesure lissée.

3. Système de chauffage selon la revendication 1 ou la revendication 2, dans lequel le système de modulation d'impulsions en durée est appliqué de sorte qu'au moins deux niveaux distincts de puissance de chauffage puissent être obtenus.

4. Système de chauffage selon l'une quelconque des revendications précédentes, comprenant en outre un capteur de température (141, 142) couplé de manière opérationnelle à ladite unité de commande (120), ladite unité de commande (120) étant adaptée de façon à modifier un cycle de service dudit courant en réponse à une lecture de température reçue dudit capteur de température (141, 142).

5. Système de chauffage selon la revendication 4, dans lequel ledit capteur de température (142) est placé dans ou près de ladite unité de commande (120).

6. Système de chauffage selon la revendication 4, dans lequel ledit capteur de température (141) est placé près dudit élément résistif (110).

7. Véhicule motorisé comprenant un réservoir de fluide pourvu du système de chauffage selon l'une quelconque des revendications précédentes.

8. Véhicule motorisé selon la revendication 7, dans lequel ledit réservoir de fluide (100) est un réservoir pour stocker un additif à utiliser dans une réaction de réduction sélective catalytique.

9. Procédé pour chauffer un réservoir de fluide d'un véhicule automobile (100) avec au moins un élément résistif (110) recevant un courant électrique d'une alimentation électrique sous la commande d'une unité de commande (120), ledit procédé comprenant la variation dudit courant en fonction d'un système de modulation d'impulsions en durée, **caractérisé en ce que** ledit procédé comprend en outre la mesure d'une tension de ladite alimentation électrique et la détermination d'un cycle de service pour ladite modulation d'impulsions en durée en proportion inverse au carré de ladite tension d'alimentation mesurée.

10. Procédé selon la revendication 9, comprenant en outre le lissage de ladite tension d'alimentation mesurée, dans lequel ladite détermination est effectuée en proportion inverse au carré de ladite tension d'alimentation lissée.

11. Procédé selon la revendication 9 ou la revendication 10, dans lequel ledit système de modulation d'impulsions en durée est appliqué de sorte qu'au moins deux niveaux distincts de puissance de chauffage puissent être obtenus.

12. Procédé selon l'une quelconque des revendications 9 à 11, comprenant en outre la mesure d'une température, et la modification d'un cycle de service dudit courant en réponse à ladite température.

13. Procédé selon la revendication 12, dans lequel ladite température est mesurée dans ou près de l'unité de commande (120).

14. Procédé selon la revendication 12, dans lequel ladite température est mesurée près dudit élément résistif (110).

# Figure 1

# Figure 2

# Figure 3

| | select heat level |
|---|---|

310

| | measure power supply voltage |
|---|---|

320

| | smoothen power supply voltage |
|---|---|

330

| | measure temperature |
|---|---|

340

| | determine duty cycle in accordance with selected heat level |
|---|---|

350

**REFERENCES CITED IN THE DESCRIPTION**

**Patent documents cited in the description**

- WO 2008138960 A1
- EP 1505292 A2
- US 4504732 A
- WO 8602227 A
- US 6080971 A
- AU 3398493 B
- WO 9117640 A
- US 20040170212 A1